**Europäisches Patentamt**

**European Patent Office**

**Office européen des brevets**

(19)

(11) **EP 1 217 361 A2**

(12) **EUROPÄISCHE PATENTANMELDUNG**

(43) Veröffentlichungstag:
**26.06.2002 Patentblatt 2002/26**

(51) Int Cl.⁷: **G01N 27/407**

(21) Anmeldenummer: **01000744.1**

(22) Anmeldetag: **12.12.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **22.12.2000 DE 10064667**

(71) Anmelder: **SIEMENS AKTIENGESELLSCHAFT**
**80333 München (DE)**

(72) Erfinder:
• **Fleischer, Maximilian, Dr.**
**85635 Höhenkirchen (DE)**
• **Kornely, Susanne**
**80689 München (DE)**
• **Meixner, Hans, Prof. Dr.**
**85540 Haar (DE)**

(54) **Mehrstufiger Gassensor, Betriebs- und Herstellungsverfahren**

(57)    Es wird ein hybrides Sensorkonzept vorgeschlagen, das einen Metalloxidsensor in einen Pumpaufbau an Stelle der zweiten Pumpstufe integriert. Dadurch wird die hohe Detektionsfähigkeit des Metalloxidsensors im relevanten Gasmessbereich, insbesondere bei niedrigen $NO_x$-Konzentrationen, genutzt. Durch die vorgeschaltete erste Pumpstufe werden sämtliche Querempfindlichkeiten des Metalloxidsensors eliminiert.

FIG 7

EP 1 217 361 A2

**Beschreibung**

Die Erfindung betrifft die selektive Detektion von Gasen bei gleichzeitiger Anwesenheit von Sauerstoff in Gasgemischen mit Gassensoren, insbesondere die Detektion von $NO_x$ in Verbrennungsabgasen.

Anwendungen sind beispielsweise:

- Regelung der Verbrennung in Kfz-Motoren
- Steuerung des Abgasreinigungssystems für Dieselmotoren (DENOx Katalysator mit Reduktionsmittelzugabe, z.B. Harnstoff)
- Überwachung der Funktion des Dreiwegekatalysators im Otto-Pkw
- Überwachung des Speicherkatalysators im Otto-Magermotor
- Regelung der Verbrennung in Kleinfeuerungsanlagen.

Aus Gründen des Umweltschutzes müssen in zunehmendem Maße Verbrennungsprozesse hinsichtlich Emissionsreduzierung optimiert werden. Dies betrifft im wesentlichen die Emissionen von Stickoxiden, sowie die der unverbrannten Kohlenwasserstoffe, da die Kohlendioxidproduktion unmittelbar mit der umgesetzten Energie korreliert. Diese beiden Größen sind daher sinnvolle Zielparameter zur Regelung der Verbrennungsprozesse sowie zur Überwachung/Steuerung von Systemen zur Abgasreinigung. Das geeignetere Zielgas scheint der Stickoxidanteil im Abgas, da es durch die sprunghaft wechselnden Sauerstoffanteile im Abgas oftmals zu einer nachteiligen Beeinflussung der HC-Messung (Kohlenwasserstoff-Messung) kommt.

Für das Motormanagement, die On-Board-Diagnose von Powertrain-Komponenten bzw. die Regelung des DeNOx-Verfahrens zur Abgasreinigung werden Sensoren zur Detektion von Schadstoffkomponenten wie Stickoxiden und Kohlenwasserstoffen im Abgas von Verbrennungsmotoren benötigt.

Verwendung von Sensoren auf der Basis von <u>Festelektrolyten</u>:

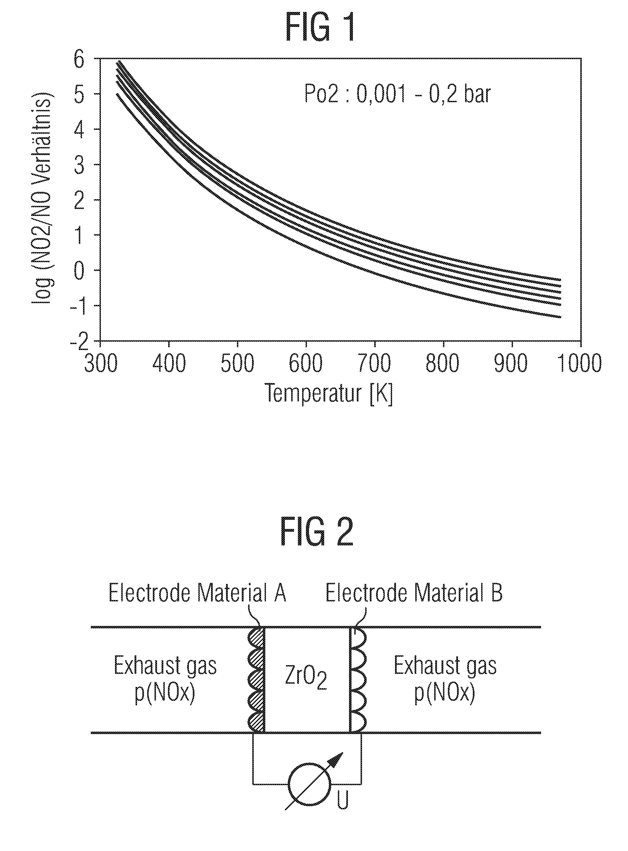

Zum einen werden sogenannte "Mixed Potential" Sensoren, verwendet. Bei diesen handelt es sich um Membranen bestehend aus einem Ionenleiter (z.B. aus dem bei Temperaturen von 600-700°C O2-Ionen leitenden $ZrO_2$), der mit porösen Elektroden unterschiedlicher katalytischer Aktivität hinsichtlich des Zielgases versehen ist. Liegt an beiden Elektroden das Messgas an, bewirken die unterschiedlichen katalytischen Aktivitäten verschiedene effektive Sauerstoffaktivitäten an den Elektroden. Als Folge davon lässt sich gemäß dem Nernst Gesetz eine Spannung abgreifen, die mit der Zielgaskonzentration eindeutig korreliert. Ein Beispiel hierfür zeigt Figur 2.

Der Nachteil dieser Sonden ist, dass das Anzeigesignal direkt von der katalytischen Aktivität der Elektroden abhängt. Durch das Vorhandensein von Katalysatorgiften im Abgas, wie beispielsweise Schwefel oder Si-haltige Bestandteile, wird außerdem bei derartigen Sonden die Aktivität der Elektroden im Einsatz verändert, so dass die Sensorsignale i.A. starke Drifterscheinungen zeigen.

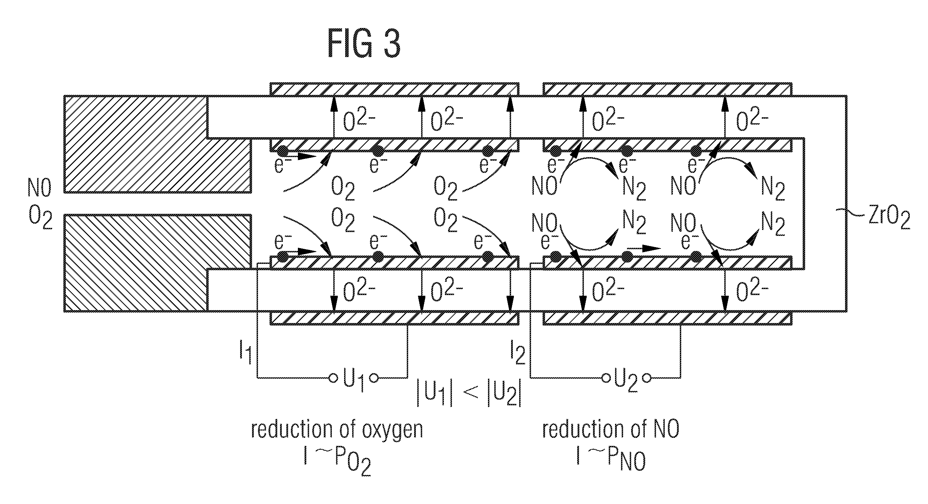

In letzter Zeit werden diese Sonden meistens als mehrstufige Pumpsensoren ausgeführt, ein Prinzipbild hierfür zeigt Figur 3.

Das Gas tritt durch eine definierte, hier kanalförmige, Diffusionsöffnung in eine Kavität ein. Es durchströmt eine erste Pumpstufe, bei der z.B. der Sauerstoff durch die oben beschriebene elektrochemische Reaktion komplett entfernt wird. Das verbleibende Gas diffundiert dann (z.T. durch eine zweite Diffusionsbarriere getrennt) zur zweiten Pumpstufe an der das NO zu $O^{2-}$ und $N_2$ umgesetzt wird. Das $O^{2-}$ wandert als Ion durch das $ZrO_2$ und erzeugt im äußeren Kreis einen der NOx-Konzentration der umgebenden Gasatmosphäre proportionalen Strom, der das Signal des NOx-Sensors darstellt. Das Problem in praktischen Ausführungen ist, dass dieser Strom besonders bei kleinen NOx-Konzentrationen extrem klein ist. Typische Werte für den Pumpstrom liegen im Bereich < µA für zweistufige Pumpsonden zur NO-Detektion. Derartige Ströme sind generell nur schwer reproduzierbar zu messen und werden durch Einstreuungen z.B. von den Heizströmen des geheizten Sensorkörpers, die im 1A-Bereich liegen, sowie von elektromagnetischen Störungen (Zündspule) gestört.

Nachteilig ist, dass mit derartigen Aufbauten sehr kleine NOx-Konzentration (<10ppm) nur schwer bzw. mit großem Fehler zu detektieren sind und mit abnehmender Konzentration des zu detektierenden Gases der Pumpstrom linear abnimmt. Gerade das Messen kleiner Konzentrationen ist aber bei modernen Verbrennungskonzepten mit stark reduzierten Emissionen zunehmend von Bedeutung.

Sensoren auf der Basis <u>halbleitender Metalloxide</u>:

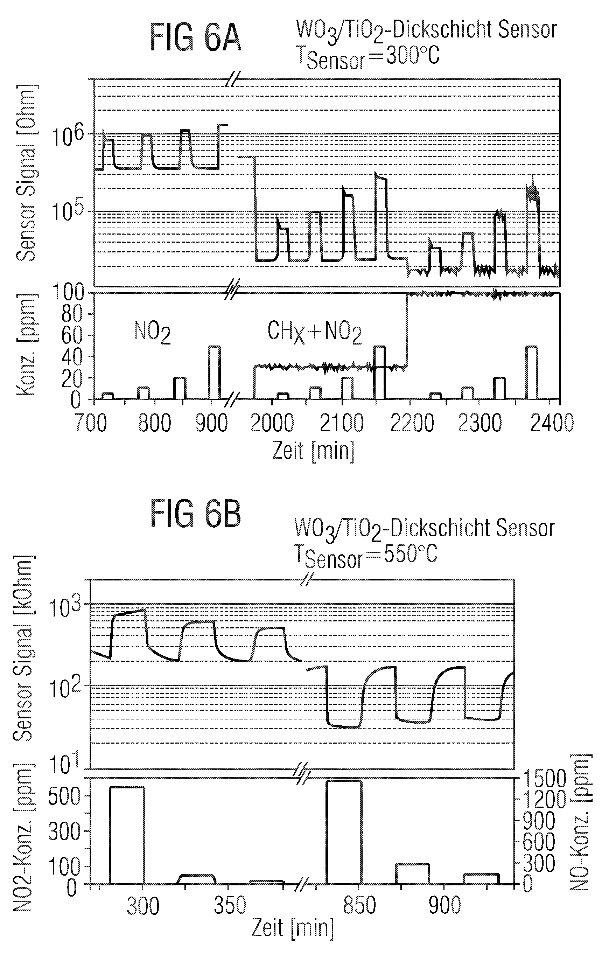

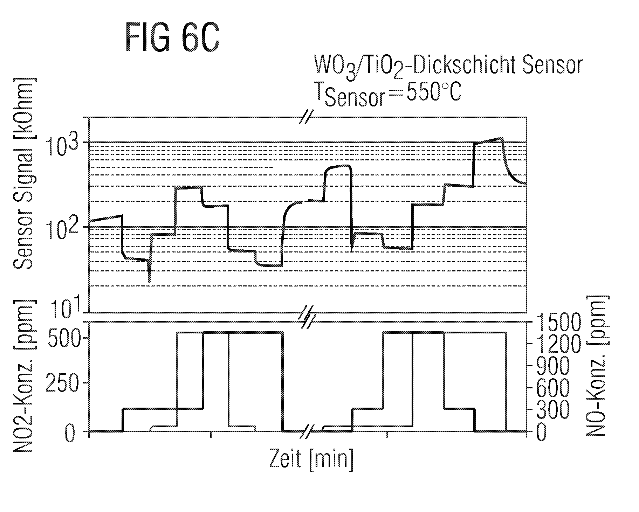

Geeignete Sensoren auf der Basis halbleitender Metalloxide, wie z.B. W/Ti-Mischoxide oder Cr-dotierte Titanoxide, weisen sehr hohe Sensitivitäten mittels ihrer elektrischen Leitfähigkeit für die Präsenz von Stickoxiden auf. Diese Sensoren haben insbesondere im Bereich kleiner Konzentrationen einen hohen Signalhub. Der immanente Vorteil liegt hierbei darin, dass besonders der für künftige Motor-/Verbrennungs-Managementsysteme wichtige Bereich kleiner $NO_x$-Konzentrationen, beispielsweise im mageren Kfz-Abgas, im Bereich um 10ppm, mit hoher relativer Genauigkeit aufgelöst werden kann. Vgl. hierzu Figur 6A - 6C.

Der generelle Nachteil derartiger Sensoren liegt in einer im allgemeinen für Verbrennungsabgase nicht ausreichenden Selektivität. Die Sensoren reagieren sowohl auf NO als auch auf $NO_2$ und das mit einem entgegengesetzten Signal. In Mischungen dominiert meistens das $NO_2$ das Sensorsignal. Aufgrund der primären Bildung von NO im Verbrennungsprozess und wechselnden NO/NO$_2$ Mischungsverhältnissen abhängig von Temperatur und O$_2$-Gehalt kann das NO$_2$ Signal jedoch nicht als allein aussagekräftige Größe für den Gesamt-NOx-Gehalt im Abgas herangezogen werden. Zum anderen bewirken vorhandene HC-Anteile, auf die Metalloxide üblicherweise querempfindlich reagieren, eine wesentliche Messsignalverfälschung, vgl. Figur 6A - 6C.

Weiterhin liegen bei den meisten Metalloxiden, speziell bei den für NOx-sensitiven, keine ausreichend hohen Reduktionsstabilitäten vor, so dass deren Einsatzbereich im allgemeinen auf den mageren Bereich der Verbrennung beschränkt ist. Im fetten Bereich liegt kein auswertbares Sensorsignal vor, oder es findet sogar eine irreversible Schädigung des Sensors statt.

Aus der europäischen Patentanmeldung EP-A2-0 709 668 ist ein Gassensor zur Messung von Gaskonzentrationen in Gasgemischen bekannt, der auch in Gasatmosphären mit variablem Sauerstoffpartialdruck funktioniert. Der Sensoraufbau beinhaltet einen Messraum an dessen Wand hinter einem Messgaseinlass sowohl eine Sauerstoffpumpe in Form eines Festkörperelektrolytelementes zur Einstellung des Sauerstoffpartialdruckes in dem Messraum, als auch nachgeschaltet ein Oxid-Halbleiterelement zur Bestimmung spezifischer Gaskomponenten und deren Konzentration vorhanden sind. Das Pumpelement regelt den Sauerstoffpartialdruck in dem Messraum auf einen konstanten Wert. Eine Handhabung der vielfältigen Querempfindlichkeiten von beispielsweise Metalloxidhalbleitersensoren wird jedoch nicht näher erläutert.

Der Erfindung liegt die Aufgabe zugrunde Sensor und Verfahren für die Detektion des Stickoxidanteils in Verbrennungsabgasen, sowie Sensorherstellungsverfahren kostengünstig, robust und hinsichtlich der Elektronik einfach darzustellen.

Die Lösung dieser Aufgabe geschieht durch die jeweilige Merkmalskombination von Anspruch 1, 21 bzw. 25.

Vorteilhafte Ausgestaltungen sind den Unteransprüchen zu entnehmen.

Es wird ein hybrides Sensorkonzept vorgeschlagen, das einen Metalloxidsensor in einen mehrstufigen Pumpaufbau an Stelle der zweiten Pumpstufe integriert. Dadurch wird die hohe Detektionsfähigkeit des Metalloxidsensors im relevanten Gasmessbereich, insbesondere bei niedrigen NO$_x$-Konzentrationen, genutzt. Durch die vorgeschaltete erste Pumpstufe werden sämtliche Querempfindlichkeiten des Metalloxidsensors auf reduzierende Gase eliminiert, sowie das NO/NO2 Gleichgewicht auf einen Referenzwert eingestellt.

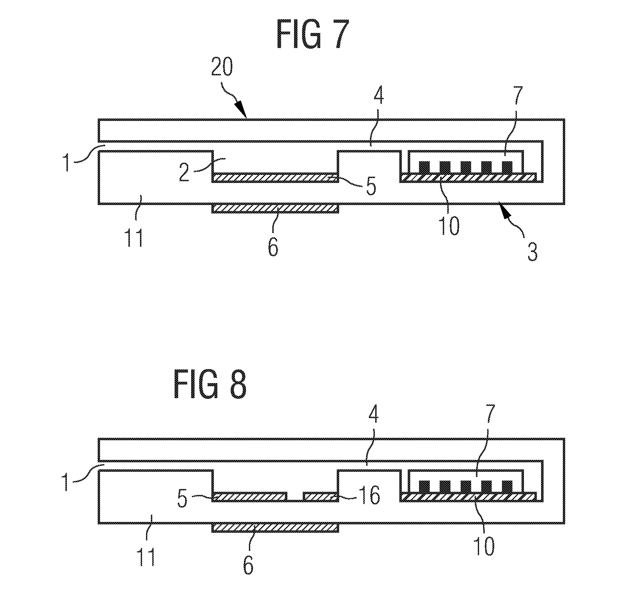

Der Prinzipaufbau ist in Figur 7 dargestellt.

Zur Funktionsweise:

Über einen diffusionsbegrenzenden Gaseinlass 1 gelangt das Messgas zur ersten Kavität, die aus einer Pumpstufe mit katalytisch aktiven Elektroden besteht. Hier werden simultan alle Querempfindlichkeiten des später verwendeten Metalloxidsensors eliminiert:

- In der Pumpstufe wird durch aktives Pumpen entweder für ausreichend Sauerstoff gesorgt (Überschuss) oder Sauerstoff entfernt oder sogar auf einen konstanten Sauerstoffpartialdruck geregelt, der im mageren Bereich liegt. Im letzten Fall ist noch zusätzlich die in Figur 8 gezeigte Messelektrode 16 nötig. Damit wird sowohl die O$_2$-Querempfindlichkeit des nachgeschaltet verwendeten Metalloxidsensors eliminiert, sowie auch der Betrieb im fetten Gemisch möglich.

- An der katalytisch aktiven Pumpelektrode in der ersten Kavität werden die Kohlenwasserstoffe zu CO$_2$ und H$_2$O oxidiert, welche vom später verwendeten Metalloxidsensor nicht detektiert werden. Damit wird die HC-Querempfindlichkeit des nachgeschalteten Metalloxidsensors eliminiert.

- An der katalytisch aktiven Pumpelektrode in der ersten Kavität stellt sich gemäß der dort herrschenden Temperatur das thermodynamische Gleichgewicht zwischen NO und NO$_2$ ein, vgl. Figur 1. Demgemäß liegt bei einer Temperatur von 300°C und 1% O2 etwa 10 mal mehr NO$_2$ als NO vor; alternativ kann bei einer Temperatur von 700°C und geringem O$_2$-Anteil das Gleichgewicht auf die Seite des NO verschoben werden. D.h. das Problem der Uneindeutigkeit des Gleichgewichtes von NO/NO$_2$ wird gelöst.

Das aufbereitete Messgas diffundiert nun zur zweiten Kavität. Dort wird das NO$_2$ mit hoher Empfindlichkeit gemessen. Da optimierte Metalloxide im Bereich <10ppm eine sehr hohe Signalsteigung aufweisen, ist in diesem für die meisten Anwendungen wichtigsten Bereich eine hohe relative Genauigkeit möglich. Zum anderen stellen die Widerstände der Metalloxide, welche im Wesentlichen im Bereich um 1kOhm liegen, eine für eine kostengünstige Elektronik sehr gut verarbeitbare Eingangsgröße dar. Zum Vergleich: für NOx-Pumpsensoren müssen wesentlich aufwendigere A/D Konverter mit 1nA Auflösung eingesetzt werden.

Vorteilhafte Metalloxide sind z.B. WO$_3$/TiO$_2$ Mischoxide, WO$_3$, TiO$_2$, Cr$_2$O$_3$ mit Ti dotiert, SnO$_2$, Vanadium- und Molybdänoxide, sowie diese Substanzen versetzt mit einem Katalysator.

Eine vorteilhafte Ausgestaltung der Erfindung betrifft die Bereitstellung des benötigten Sauerstoffs über eine elektrochemische Zersetzung des Wassers und Einleiten des gewonnen Sauerstoffs in einen Versorgungskanal, der dann mit reinem Sauerstoff gefüllt ist. Dieser kann als idealer Referenzpunkt zur Gasmessung bzw. als ausreichendes Sauerstoffreservoir zur Sauerstoffversorgung einer Pumpstufe und nachgeschaltet eines Metalloxidsensors genutzt werden.

Eine vorteilhafte und kostengünstige Ausgestaltung eines betrachteten Gassensors beinhaltet die Ausführung des Sensoraufbaues durch Dickschichttechnik. Dies ist insbesondere bei den Varianten der Erfindung, in denen die Darstellung der Gasdiffusionsstrecke und des Gasversorgungskanals in Form von gasdichten von dem Ionenleiter beabstandeten Schichten, mit optionsweise freiem oder mit porösem Material gefülltem Innenraum der Fall. Die Herstellungsverfahren in der Dickschichttechnik benötigen maximal eine Prozesstemperatur von 900 °C. Dies ist für den halbleitenden Metalloxidsensor wesentlich, da bei höheren Temperaturen die gassensitive Schicht ihre Funktionsfähigkeit ganz oder teilweise einbüßen kann.

Es ist weiterhin besonders vorteilhaft einen einfachen Gassensoraufbau zu wählen, bei dem als zentraler Träger lediglich eine Keramikfolie als Ionenleiter vorgesehen ist. Die ober- und unterseitigen Aufbauten können jeweils in Reihe und gegeneinander versetzt angeordnet werden, so dass sie eine Einheit mit beschriebener Funktionalität bilden.

Da die Pumpstufe und der resistive Gassensor bzw. der Metalloxid-Sensor nicht bei gleichen Temperaturen jeweils optimale Funktionen zeigen, ist eine für jede Sensorstufe separate Temperatureinstellung und -regelung von Vorteil.

Der Einsatz von diffusionsbegrenzenden Mitteln kann eine Optimierung für die gegenseitige Abstimmung der verschiedenen Sensorstufen untereinander bedeuten.

Die zur eindeutigen Lage des NO/NO$_2$-Gleichgewichtes nötigen Voraussetzungen sind beispielsweise die Kenntnis der Temperatur im Gasgemisch oder des Sauerstoffpartialdruckes. Diese Größen können durch Temperaturregelung bzw. durch separate Sauerstoffkonzentrationsmessung mit eventueller Regelung auf einen konstanten Wert optimiert werden.

Um eine zuverlässige Versorgung von Referenzgas im Gasversorgungskanal zu erzielen kann vorteilhafterweise eine zusätzliche Pumpstufe eingesetzt werden, die Sauerstoff zuführt. Primärseitig könnte beispielsweise Feuchte aus einem Verbrennungsabgas verwendet werden.

Der zweistufige Sensoraufbau bei dem das Messgas durch beide Stufen strömt hat demnach folgende Vorteile:

Es liegt ein kostengünstiger Sensoraufbau vor, der erstmals bei der Herstellung keinen den Metalloxidsensor zerstörenden Prozesstemperaturen ausgesetzt ist, da diese im Bereich von maximal 900 bis 950 °C liegen. Weiterhin geschieht an der ersten Sensorstufe, der Pumpstufe, neben der O$_2$-Zufuhr eine vollständige Oxidation der Kohlenwasserstoffe, sowie des CO und des H$_2$. Damit sind Querempfindlichkeiten für den Metalloxidsensor eliminiert. Das NO/NO$_2$-Gleichgewicht wird zudem definiert eingestellt, was einen zuverlässigen Betrieb des Metalloxidsensor ermöglicht.

In einer Ausgestaltung der Erfindung kann die innere Elektrode der Pumpstufe geteilt sein, wobei die in Strömungsrichtung gesehen erste Elektrode auch katalytisch aktiv sein kann. Die Aufteilung geschieht um die jeweiligen sensitiven Materialien optimal auswählen und abstimmen zu können.

Es werden anhand von schematischen Figuren Ausführungsbeispiele beschrieben:

Figur 1 zeigt die Lage des thermodynamischen Gleichgewichts im Stickoxidsystem in Abhängigkeit von der Temperatur sowie des Sauerstoffpartialdrucks,

Figur 2 zeigt das Schema einer "Mixed Potential" Sonde,

Figur 3 zeigt den Prinzipaufbau eines mehrstufigen Pumpsensors, speziell zur NO$_x$-Detektion im Kfz-Abgas,

Figur 4 zeigt eine reale Ausführung eines zweistufigen Pumpsensors gemäß EP-A-0678740, wobei in den Aufbau eine elektrische Heizung integriert ist, die mit Spannungen im Bereich mehrerer Volt und Strömen im Bereich von einem oder wenigen Ampere arbeitet. In der Praxis führen nicht ideale Isolationseigenschaften des auf 600 °C aufgeheizten keramischen Aufbaues zu deutlichem Übersprechen von der Heizung auf die Pumpstruktur und damit zur Störung der Messung des kleinen Detektionsstroms,

Figur 5 zeigt die Sensitivitätscharakteristik eines WO$_3$/TiO$_2$ -Dickschichtsensors (Metalloxid) im Bereich kleiner, für moderne Motormanagementsysteme wichtiger NO$_2$-Konzentrationen, wobei selbst bei minimaler Konzentration von 5ppm ein Signalhub von mehr als die vierfache Widerstandsänderung erreicht wird,

Figur 6A zeigt das Ansprechverhalten eines WO$_3$/TiO$_2$-Dickschichtsensors zunächst auf pures NO$_2$ (Minuten 700 - 910) und anschließend auf NO$_2$ mit verschiedenen CH$_x$-Hintergrundkonzentrationen (ab Minute 1950). Erkennbar ist, das der CH$_x$-Hintergrund eine massive Verschiebung der Grundleitfähigkeit des Sensors und damit ein fehlerhaftes Signal bewirkt. Zum anderen ist ersichtlich, dass durch den CH$_x$-Hintergrund die Sensitivität auf zusätzlich NO$_2$ gesteigert wird,

Figuren 6B und 6C zeigen den Zeitverlauf einer Messung zunächst mit NO und NO$_2$, die das Ansprechverhalten in unterschiedliche Richtungen zeigen (5B oben), sowie die gegenseitige Beeinflussung der gegenteiligen Effekte von NO bzw. NO$_2$ (5C unten),

Figur 7 zeigt das Prinzip eines erfindungsgemäßen Aufbaus,

Figur 8 zeigt das Prinzip des erfindungsgemäßen Aufbaus, wobei in der ersten Pumpstufe noch eine Messelektrode zur Regelung auf konstanten Sauerstoffgehalt vorgesehen ist,

Figur 9 zeigt ein Ausführungsbeispiel der Erfindung in einer Realisierung durch einen HTCC Sinterkörper aus ionenleitender Keramik,

Figur 10 zeigt ein Ausführungsbeispiel der Erfindung in einer Realisierung durch einen HTCC Sinterkörper aus ionenleitender Keramik, bei dem jedoch das Diffusions-Kanalsystem zur Gasdetektion in Dickschichttechnik über einer porösen Schicht realisiert wird,

Figuren 11A und 11B zeigen ein Ausführungsbeispiel der Erfindung, wobei der Sensor auf einem Trägerkörper aus ionenleitender Keramik basiert und bei dem sämtliche funktionalen Elemente durch Beschichtungsschritte realisiert werden; Figur 11A zeigt den Querschnitt des Aufbaus, Figur 11B zeigt in der Sicht von unten die benachbarte Anordnung von Heizung und unterer Pumpelektrode,

Figuren 12A und 12B zeigen die Weiterentwicklung einer Aufbauvariante gemäß Figur 11 mit Sauerstoffversorgung der unteren Pumpelektrode. Figur 12A zeigt den Querschnitt, Figur 12B zeigt in der Sicht von unten die benachbarte Anordnung von Heizung und unterem Gasversorgungskanal.

Figur 13 zeigt die räumliche Trennung von Pump- und Katalysefunktion, um diese auf jeweils optimierter Temperatur durchführen zu können. In diesem Beispiel wird durch die Anordnung der Heizungsstruktur die Pumpstufe bei 600°C betrieben, die Einstellung des $NO_2/NO$-Gleichgewichts (wegen höherem $NO_2$-Anteil) sowie die $NO_2$-Detektion (wegen höherer Sensitivität) wird jeweils bei 300°C vorgenommen.

Figur 14 zeigt das Prinzip des Befüllens eines Gaskanals mit Sauerstoff, welcher aus Feuchte generiert wird,

Figur 15 zeigt ein Ausführungsbeispiel der Verwendung eines erfindungsgemäßen Gasversorgungskanals für Sauerstoff zur Sauerstoffversorgung einer ersten Pumpstufe, wobei die Realisierung eines Versorgungskanals in einem HTCC Sinterkörper aus ionenleitender Keramik und die der Gasdiffusionsstrecke zur Gasdetektion in Dickschichttechnik über einer porösen Schicht geschieht,

Figuren 16A und 16B zeigen ein Ausführungsbeispiel der Verwendung eines erfindungsgemäßen Gasversorgungskanals für Sauerstoff zur Sauerstoffversorgung einer ersten Pumpstufe. Die Realisierung sowohl des Versorgungskanals als auch die der Diffusionsstrecke zur Gasdetektion ist in Dickschichttechnik über porösen Schichten ausgeführt. Figur 16A zeigt den Querschnitt des Aufbaues, Figur 16B zeigt in der Sicht von unten die benachbarte Anordnung von Heizung und Gasversorgungskanal.

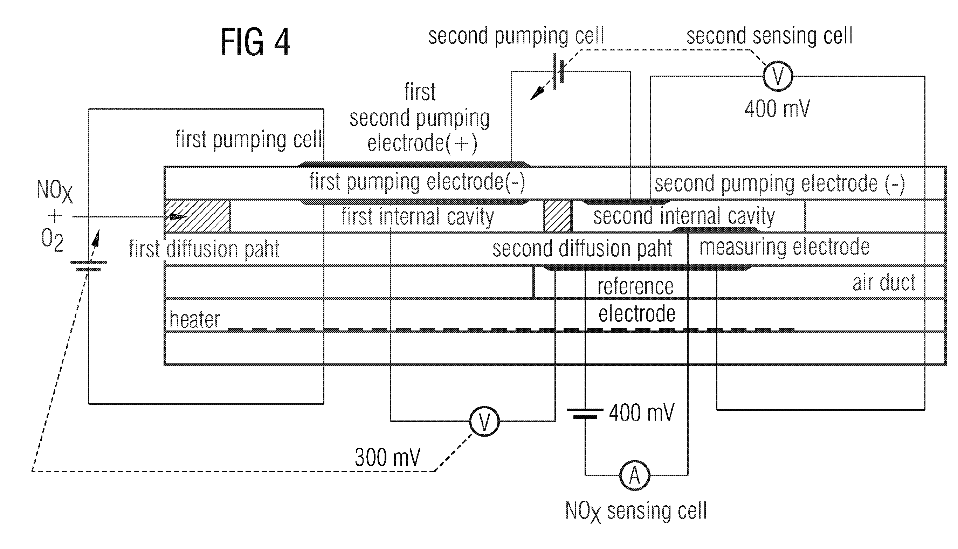

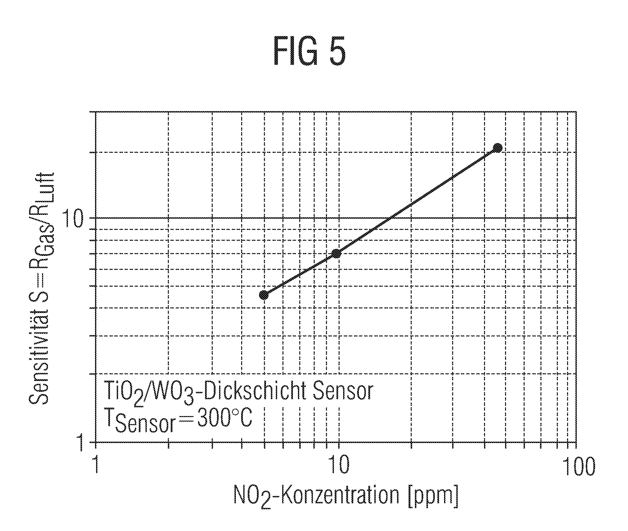

Die Figuren 1 bis 6 zeigen bekannte Diagramme und Sensoren aus dem Stand der Technik.

Figur 7 stellt die Grundform der Erfindung dar.

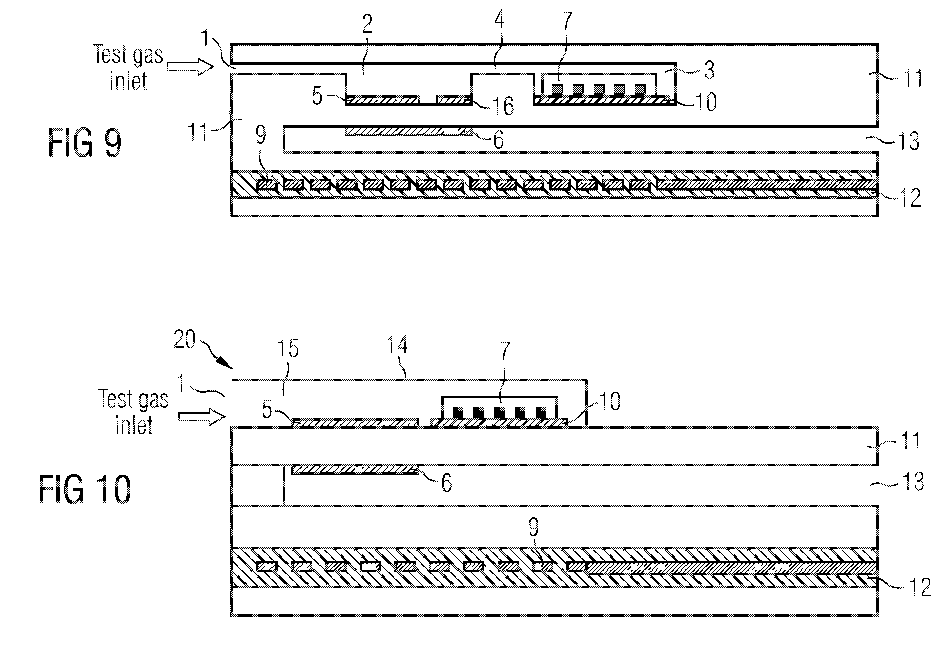

Die Figur 8 zeigt ein Ausführungsbeispiel, welches HTCC-Technologie (High Temperature Cofired Ceramics) zur Realisierung des ionenleitenden Trägerkörpers verwendet, welcher vorzugsweise aus Yttrium stabilisiertem Zirkonoxid (YSZ) besteht. In der ersten Pumpstufe ist ein Kanalsystem zur Gasvorbehandlung sowie Gasmessung vorgesehen. Dabei wird in der ersten Sensorstufe 2 mit Hilfe der katalytisch aktiven Pumpelektroden 5 und 6 ein konstanter Sauerstoffpartialdruck in der Kammer eingestellt und zwar entweder durch ein Herauspumpen des Sauerstoffs aus der Kammer oder durch ein Hineinpumpen in die Kammer über einen zusätzlichen zweiten Referenzkanal/Gasversorgungskanal 13, wie es in Figur 9 dargestellt ist. Dies ist für den Betrieb in rein reduzierenden Atmosphären von Vorteil. Wahlweise kann die Anordnung auch so sein, dass die untere Pumpelektrode 6 in Kontakt mit dem Umgebungsgas steht, d.h. der untere Gasversorgungskanal nicht benötigt wird. In der ersten Kammer findet eine Gasvorbehandlung statt und zwar werden zum einen die Kohlenwasserstoffe an der katalytisch aktiven Elektrode 5 verbrannt und zum anderen wird über eine konstante Betriebstemperatur und einen konstanten $O_2$-Gehalt ein definiertes $NO/NO_2$-Gleichgewicht eingestellt. Das so vorbehandelte Gasgemisch erreicht schließlich über ein diffusionsbegrenzendes Mittel 4 den Metalloxidsensor 7, mit Hilfe dessen die $NO_2$-Konzentration bestimmt wird.

Derartige Strukturen, wie in Figur 8, stellen jedoch aufgrund des komplexen Aufbaus sehr hohe Anforderungen an die Herstellungstechnologie und sind daher durch hohe Kosten gekennzeichnet. Zudem sind die zur Verwendung im Metalloxidsensor 7 möglichen Sensormaterialien begrenzt, da diese in einem Aufbau gemäß Figur 9 den hohen Temperaturen von mehr als 1500°C des Sintervorgangs des ionenleitenden Trägerkörpers 11 widerstehen müssen.

Dieses Problem löst ein Aufbau gemäß Figur 10. Auch er basiert auf einem ionenleitenden Trägerkörper der in HTCC-Technologie hergestellt wird. Anschließend an diesen Trägerkörper/Ionenleiter 11 wird in einer Folge von Beschichtungsschritten zuerst der Metalloxidsensor 7 aufgebracht und abschließend in Siebdrucktechnik eine poröse Diffusionsstrecke 15 erzeugt. Dies wird erreicht, indem zuerst eine sehr poröse Schicht aufgebracht wird und dann deren Oberfläche mit einer gasdichten Schicht 14 (z.B. Glas) versiegelt wird, wobei ein Gaseinlass 1 frei bleibt.

Hier sind zur Erzeugung des Diffusionskanals 15 wesentlich niedrigere Temperaturen notwendig, was die Wahl der Sensormaterialien für den Metalloxidsensor ausschlaggebend erweitert. Zudem sind aufgrund der einfacheren Herstellung die Kosten für einen derartigen Aufbau wesentlich niedriger.

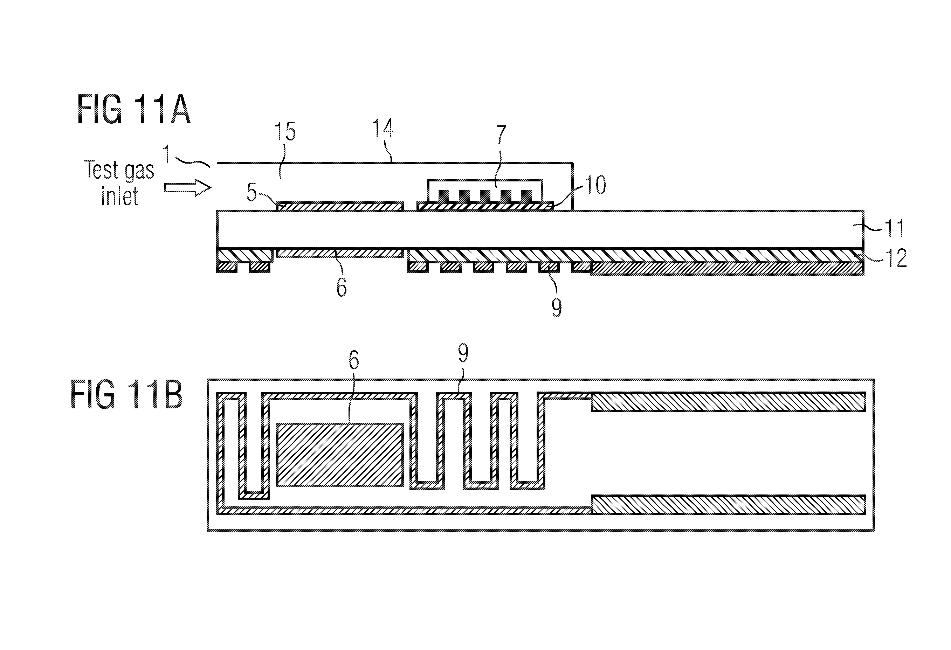

Die Realisierung des Diffusionskanalsystems zur Gasdetektion bewirkt wie oben erläutert wesentliche Vorteile, so dass im weiteren Ausführungsformen betrachtet werden, die hierauf basieren. Bei dem Einsatz in Gasgemischen, welche noch einen ausreichend hohen Anteil an Restsauerstoff besitzen kann ein sehr kostengünstiger Aufbau gemäß Figur 11A und 11B, eingesetzt werden. Es wird hier überhaupt kein HTCC-Laminat mehr benötigt. Der ionenleitende Trägerkörper besteht aus einer kostengünstig herstellbaren Keramikfolie, auf die Strukturen in einer Folge von kostengünstigen Beschichtungsschritten aufgebracht werden.

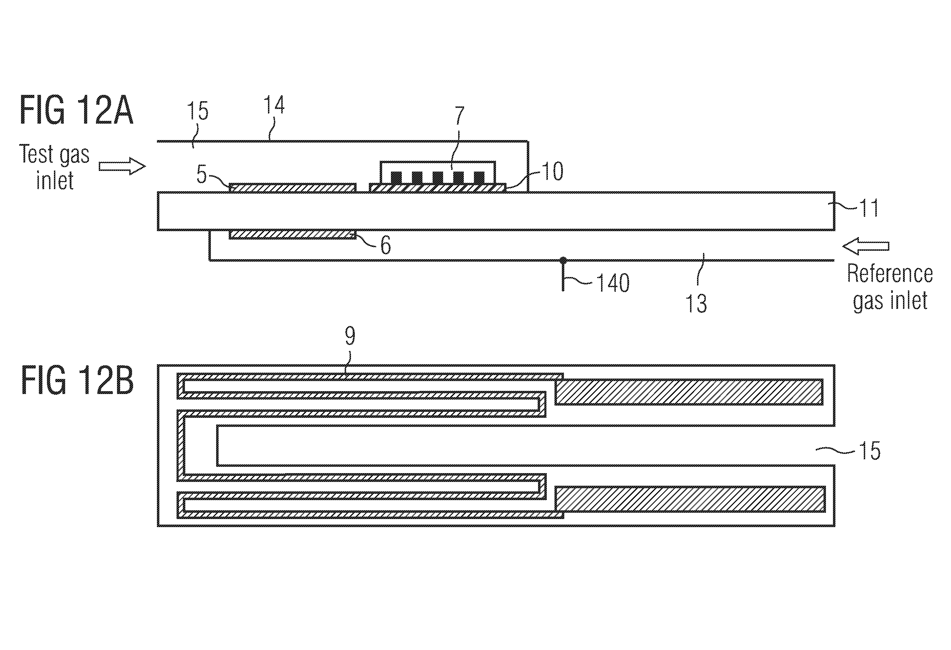

Eine Weiterbildung einer Ausführungsform gemäß Figur 11A, B ist in Figur 12A und 12B zu sehen, bei der ebenfalls ein Gaskanal 13 zur Sauerstoffzufuhr für die untere Pumpelektrode 6 vorliegt, dieser jedoch auch in Schichttechnologie aufgebaut wird. Eine derartige Struktur kann auch in sauerstofffreien Gasgemischen (fetter Betrieb eines Motors) eingesetzt werden.

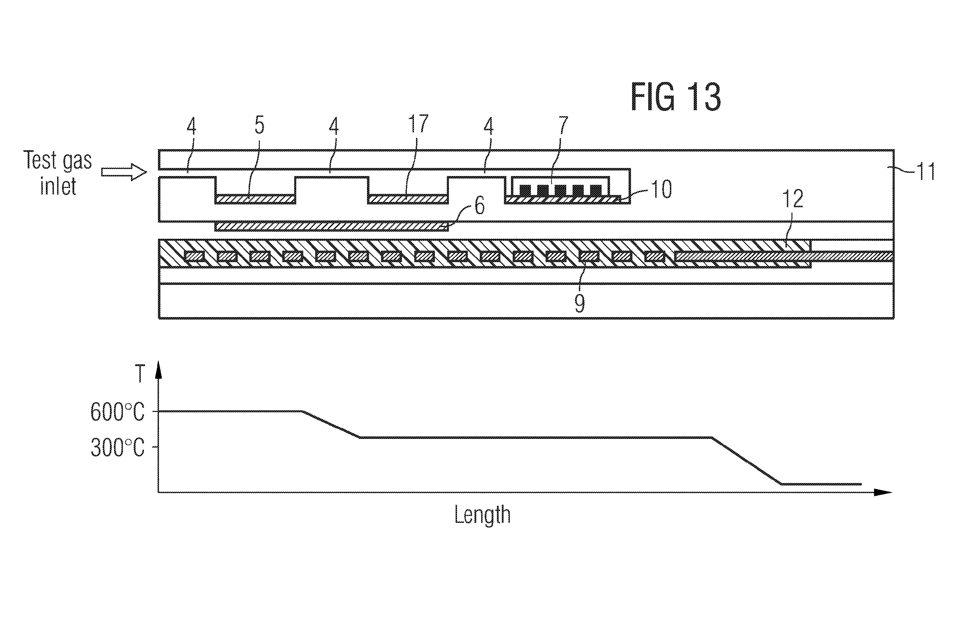

Zur Erzielung eines möglichst großen Anteils an $NO_2$ bei der katalysierten Gleichgewichtseinstellung ist eine möglichst geringe Temperatur in der ersten Sensorstufe, der Pumpstufe, abzustreben, vgl. Figur 1. Zur Erzielung ausreichender Pumpleistung sind bei herkömmlichen Ionenleitern jedoch ca. 600°C notwendig. Dies ist erfindungsgemäß durch eine Abwandlung des Aufbaus mit räumlicher Trennung von Pump-und Katalysefunktion erreichbar, wodurch diese auf verschiedenen Temperaturen betrieben werden können. Ein Schema eines derartigen Aufbaus zeigt Figur 13. Zur Realisierung des Aufbaus können wieder sinngemäß die oben beschriebenen Kombinationen aus HTCC- und/ oder Beschichtungstechnologie verwendet werden.

Neue leistungsfähige Sensorkonzepte für erfindungsgemäße Sensoren benötigen für eine optimierte Funktion eine Versorgung mit Sauerstoff, welcher als Referenzgas eingesetzt wird. Dieser Sauerstoff ist im mageren Verbrennungsabgas i.A. in ausreichendem Maß vorhanden. Bei fetter Verbrennung liegen aber nur noch so geringe Spuren an Sauerstoff vor (bis hinab zu $10^{-16}$ bar Partialdruck), so dass dieser i.A. nicht mehr für die Sensorfunktion ausreicht.

Nachteil eines Aufbaues nach Figur 13 liegt in der langgestreckten Form des Gasversorgungskanals 13 begründet. Die begrenzte Fähigkeit eines derartigen Kanals zur Sauerstoffversorgung besteht darin, dass beim Abpumpen von Sauerstoff aus dem Versorgungskanal in den Gasdiffusionskanal das Gas dort an Sauerstoff verarmt. Aufgrund der im allgemeinen nicht sehr hohen Gasdiffusion in einem derartigen Versorgungskanal findet eine Wiederbefüllung des Versorgungskanals nur langsam statt, die Sauerstoffversorgung ist begrenzt und reicht oftmals nicht zur Versorgung der Pumpstufe bzw. des Metalloxidsensors aus.

Weiterhin liegt eine aufwändige Gehäusetechnik vor, da der Gasversorgungskanal einen Anschluss an die Umgebungsluft benötigt. Die damit verbundene Verschmutzungsproblematik ist ebenfalls zu beachten (Zusetzen des Kanals).

Unabhängig von der Stöchiometrie der Verbrennung sind im Abgas immer sehr hohe Anteile an Kohlendioxid und Wasser (jeweils mindestens in der Größenordnung von 10%) vorhanden. Beide Stoffe können mit vergleichbaren Spannungen an katalytisch aktiven Elektroden elektrochemisch gespalten werde, die Reaktionsrate des Wasser ist jedoch im Allgemeinen höher als die des Kohlendioxids, so dass sich Wasser besser als Ausgangsstoff eignet. Die Substanzen lassen sich über eine einfache Pumpzelle zersetzen, wenn die elektrochemische Reaktion durch eine ausreichend große Spannung getrieben wird, wobei an der einen Elektrode die Reaktion

$$H_2O + 2\,e- \quad \rightarrow \quad O^{2-} + H_2 \text{ bzw.}$$

$$CO_2 + 2\,e- \quad \rightarrow \quad O^{2-} + CO \text{ bzw.}$$

abläuft. Das Sauerstoffion durchläuft dann den Ionenleiter und wird an der anderen Elektrode gemäß

$$2\,O^{2-} \quad - 4\,e- \quad \rightarrow \quad O_2$$

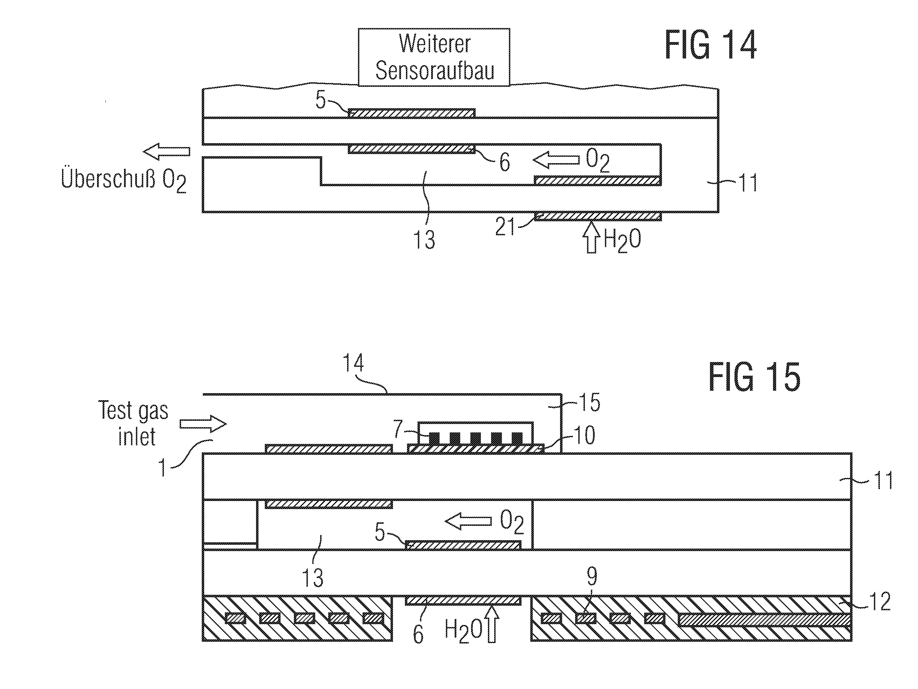

zu Sauerstoff reduziert Mit dem so generierten Sauerstoff kann dann der Gasversorgungs- bzw. Referenzkanal befüllt werden. Eine Schemazeichnung gibt Figur 14 wieder.

Für die Funktion wichtig ist, dass der Sauerstoff im Überschuss produziert wird, einen gewissen Teil des Gaskanals durchläuft, in dem sich andere Funktionselemente des Sensors befinden und anschließend zur Vermeidung des Aufbaus eines Überdrucks durch eine Öffnung entweichen kann.

Resultierende Vorteile:

- Die ausreichende Sauerstoffversorgung der Messelemente ist erstmals gesichert,
- Robuster Aufbau, der sich mit der ohnehin für derartige Sensoren benötigten Herstelltechnologie realisieren lässt,
- Einfacheres Housing, da kein Anschluss an Umgebungsluft mehr benötigt wird.

Somit liegt ein Funktionsprinzip zur Realisierung eines immer ausreichend mit Sauerstoff befüllten Referenz- bzw. Sauerstoffversorgungskanals vor.

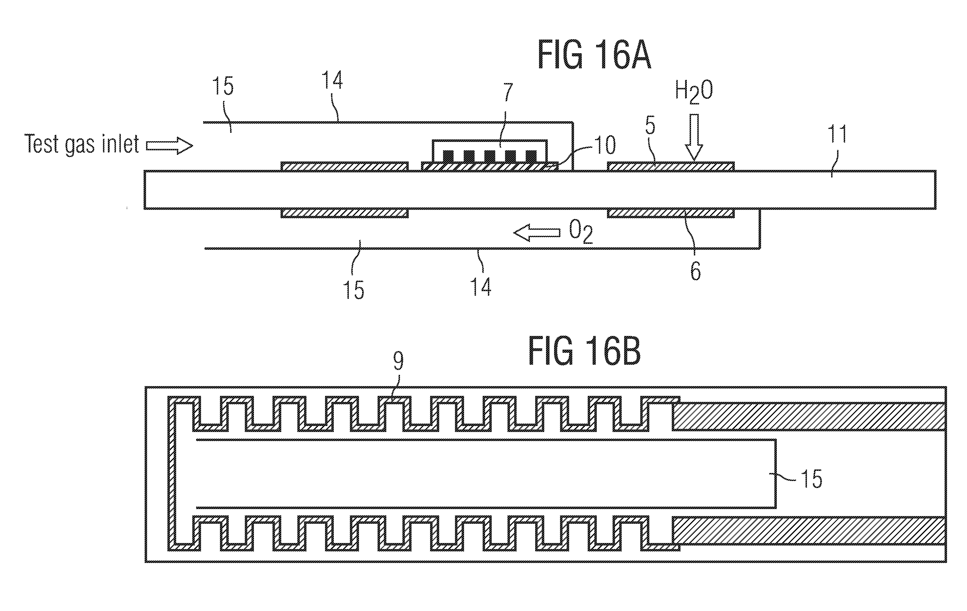

Die Erfindung lässt sich insbesondere vorteilhaft in Gassensoren integrieren. Sie erlaubt dabei , eine ausreichende Versorgung des Metalloxidsensors mit Sauerstoff sicherzustellen. Die Figuren 15 und 16 A,B zeigen entsprechende Ausführungsbeispiele.


**Patentansprüche**

1.  Mehrstufiger Gassensor mit

    -   mindestens einer Gasdiffusionsstrecke (20) zur Führung eines Messgases,
    -   einem die Gasdiffusionsstrecke (20) zumindest einseitig begrenzenden Ionenleiter (11),
    -   einer in Diffusionsrichtung gesehen ersten Sensorstufe (2), die als Pumpstufe zur Regelung des Sauerstoffgehaltes in Bereichen der Diffusionsstrecke ausgebildet ist und am Ionenleiter (11) gegenüberliegende innere und äußere poröse katalytische Elektroden (5, 6) zur vollständigen Oxidation von Kohlenwasserstoffen und Kohlenmonoxid, sowie zur Einstellung des thermodynamischen Gleichgewichtes zwischen NO und $NO_2$ im Messgas aufweist,
    -   mindestens eine weitere nachgeschaltete Sensorstufe (3), die durch einen halbleitenden Metalloxidgassensor zur Detektion und Konzentrationsmessung von $NO_2$ oder NO dargestellt ist und
    -   eine elektrische Heizung (9).

2.  Mehrstufiger Gassensor nach Anspruch 1, bei dem aufbauend auf einer Schicht eines Ionenleiters (11) die Gasdiffusionsstrecke (20) mit Pumpstufe und halbleitendem Metalloxidgassensor in Ein- oder Mehrlagendickschichttechnik dargestellt ist.

3.  Mehrstufiger Gassensor nach einem der vorhergehenden Ansprüche, bei dem als sensitives Material für den Metalloxidsensor $WO_3/TiO_2$ - Mischoxide, $WO_3$, $TiO_2$, $Cr_2O_3$ mit Ti dotiert, $SnO_2$, dotiertes $Ga_2O_3$, Vanadium- oder Molybdänoxide, sowie diese Substanzen versetzt mit einem Katalysator eingesetzt ist.

4.  Mehrstufiger Gassensor nach einem der vorhergehenden Ansprüche, bei dem der Ionenleiter des Pumpsensors aus Yttrium-stabilisiertem Zirkonoxid besteht.

5.  Mehrstufiger Gassensor nach einem der vorhergehenden Ansprüche, bei dem der Ionenleiter (11) aus einer Keramikfolie besteht.

6.  Mehrstufiger Gassensor nach einem der vorhergehenden Ansprüche, bei dem die elektrische Heizung (9) temperaturgeregelt ist.

7.  Mehrstufiger Gassensor nach einem der vorhergehenden Ansprüche, bei dem an der Gasdiffusionsstrecke (20) die hintereinander angeordneten Sensorstufen (2,3) in jeweils einer Kammer in einem Gehäuse platziert sind und zwischen einem Gaseinlass (1) und der ersten Stufe sowie zwischen den Kammern diffusionsbegrenzende Mittel (4) vorhanden sind.

8.  Mehrstufiger Gassensor nach Anspruch 7, bei dem die diffusionsbegrenzenden Mittel (4) in Form von Querschnittsverengungen eines Durchganges oder in Form von porösen Materialien dargestellt sind.

9.  Mehrstufiger Gassensor nach einem der vorhergehenden Ansprüche, bei dem die Gasdiffusionsstrecke (20) durch den Ionenleiter (11) einerseits und andererseits durch eine gasdichte Dickschicht (14) zur Darstellung eines Diffusionskanals (15) begrenzt ist.

10.  Mehrstufiger Gassensor nach Anspruch 9, bei dem der Gasdiffusionskanal (15) mit porösem Material ausgefüllt ist.

11.  Mehrstufiger Gassensor nach einem der vorhergehenden Ansprüche, bei dem in der ersten Sensorstufe (2) eine zusätzliche Messelektrode (16) zur Messung des Sauerstoffpartialdruckes vorgesehen ist.

12.  Mehrstufiger Gassensor nach einem der vorhergehenden Ansprüche, bei dem zur Bereitstellung eines Referenzgases an der Pumpstufe ein Gasversorgungskanal (13) vorhanden ist.

13.  Mehrstufiger Gassensor nach Anspruch 12, bei dem der Gasversorgungskanal (13) in Kontakt mit Luft steht.

14.  Mehrstufiger Gassensor nach Anspruch 12, bei dem der einseitig durch den Ionenleiter (11) begrenzte Gasversorgungskanal (13) weiterhin durch eine gasdichte Schicht (140) begrenzt ist.

15.  Mehrstufiger Gassensor nach einem der Ansprüche 12-14, bei dem der Gasversorgungskanal (13) mit porösem Material befüllt ist.

16.  Mehrstufiger Gassensor nach einem der Ansprüche 10 oder 15, bei dem das poröse Material von Gaskanälen (13;15) durch $ZrO_2$, $Al_2O_3$, Al-Spinell oder Glaskeramik dargestellt ist.

**17.** Mehrstufiger Gassensor nach einem der vorhergehenden Ansprüche, bei dem die innere Elektrode (5) der Pumpstufe in zwei Elektroden unterteilt ist, wobei eine Elektrode zum Pumpen des Sauerstoffs verwendet wird und eine katalytisch aktive Elektrode (17) zur NO/$NO_2$-Gleichgewichtseinstellung und/oder zur Oxidation von Kohlenwasserstoffen und Kohlenmonoxid vorgesehen ist.

**18.** Mehrstufiger Gassensor nach einem der vorhergehenden Ansprüche, bei dem eine zusätzliche Pumpstufe zur Bildung von Sauerstoff als Referenzgas im Gasversorgungskanal (13) vorgesehen ist.

**19.** Mehrstufiger Gassensor nach Anspruch 18, bei dem die Pumpstufe zur Erzeugung von Sauerstoff als Referenzgas mit ihrer äußeren katalytisch aktiven Elektrode (21) in Kontakt mit einer wasser- oder kohlendioxidhaltigen Atmosphäre steht.

**20.** Mehrstufiger Gassensor nach einem der vorhergehenden Ansprüche, bei dem auf einer einzigen Schicht eines Ionenleiters (11) sowohl die Gasdiffusionsstrecke (20) mit Pumpstufe, resistivem Sensor, Diffusionskanal (15) und gasdichter Schicht, sowie gegenüberliegend der Gasversorgungskanal (13), dargestellt durch eine gasdichte Schicht (140) und poröse Schicht und eine zusätzliche Pumpstufe zur Erzeugung von Sauerstoff als Referenzgas, ausgebildet ist, wobei sämtliche Schichten der Gasdiffusionsstrecke und des Gasversorgungskanals in Dickschichttechnik hergestellt sind.

**21.** Verfahren zum Betrieb eines Gassensors nach einem der Ansprüche 1 - 20, bei dem in der Gasdiffusionsstrecke (20) der Sauerstoffpartialdruck auf einen konstanten Wert geregelt wird und durch katalytisch aktive Elektroden das thermodynamische Gleichgewicht zwischen NO und $NO_2$ im Messgas eingestellt wird, sowie Kohlenwasserstoffe und CO komplett oxidiert werden.

**22.** Verfahren nach einem der vorhergehenden Ansprüche, bei dem die Betriebstemperatur des Sensors konstant gehalten wird.

**23.** Verfahren nach einem der Ansprüche 21 oder 22, bei dem die Betriebstemperatur der Pumpstufe im Bereich bis maximal 700°C eingestellt wird und der resistive Sensor (7) bei etwa 400 °C betrieben wird.

**24.** Verfahren zum Betrieb eines Sensors nach Anspruch 18, bei dem die Pumpstufe bei ca. 600°C und die nachgeschaltete katalytische Elektrode zur Einstellung des NO/$NO_2$-Gleichgewichtes, sowie der resistive Sensor bei ca. 300 °C betrieben werden.

**25.** Verfahren zur Herstellung eines Sensors nach einem der Ansprüche 1 - 20, bei dem die auf einem ionenleitenden Träger aufgebrachten Elemente in Ein- oder Mehrlagendickschichttechnik dargestellt sind, wobei der Sensor durch Prozesstemperaturen maximal bis 900 °C temperaturbelastet wird.

## FIG 1

Po2 : 0,001 - 0,2 bar

## FIG 2

Electrode Material A    Electrode Material B

Exhaust gas
p(NOx)    ZrO$_2$    Exhaust gas
p(NOx)

U

# FIG 3

EP 1 217 361 A2

NO
$O_2$

$O^{2-}$  $O^{2-}$  $O^{2-}$  $O^{2-}$

$e^-$  $e^-$  $e^-$  $e^-$  $e^-$  $e^-$

$O_2$  $O_2$  NO  $N_2$  NO  $N_2$

$O_2$  $O_2$  NO  $N_2$  NO  $N_2$

$e^-$  $e^-$  $e^-$  $e^-$  $e^-$  $e^-$

$O^{2-}$  $O^{2-}$  $O^{2-}$  $O^{2-}$

$ZrO_2$

$I_1$  $I_2$

$U_1$  $|U_1| < |U_2|$  $U_2$

reduction of oxygen
$I \sim P_{O_2}$

reduction of NO
$I \sim P_{NO}$

FIG 4

# FIG 5

# FIG 6A

WO$_3$/TiO$_2$-Dickschicht Sensor
T$_{Sensor}$=300°C

# FIG 6B

WO$_3$/TiO$_2$-Dickschicht Sensor
T$_{Sensor}$=550°C

# FIG 6C

WO$_3$/TiO$_2$-Dickschicht Sensor
T$_{Sensor}$=550°C

**EP 1 217 361 A2**

FIG 7

FIG 8

15

EP 1 217 361 A2

FIG 9

Test gas inlet →

FIG 10

Test gas inlet →

FIG 11A

Test gas
inlet

15  14  7

1

5  10

11

12

6

9

FIG 11B

6  9

EP 1 217 361 A2

FIG 12A

FIG 12B

FIG 13

Test gas inlet

4  5  4  17  4  7

10

6

11

12

9

T

600°C

300°C

Length

EP 1 217 361 A2

EP 1 217 361 A2

## FIG 14

Weiterer
Sensoraufbau

5

6 ← $O_2$

Überschuß $O_2$ ←

11

13

21 ↑ $H_2O$

## FIG 15

14

15

Test gas
inlet →

7 10

1

11

← $O_2$

5

13

9

6 $H_2O$ ↑

12

## FIG 16A

15    14    7    H₂O    5    11

Test gas inlet ⟹    10

15    14    ⟸ O₂    6

## FIG 16B

9

15

EP 1 217 361 A2